(19) Europäisches Patentamt
European Patent Office
Office européen des brevets

(11) **EP 2 441 541 A1**

(12) **EUROPEAN PATENT APPLICATION**
published in accordance with Art. 153(4) EPC

(43) Date of publication:
**18.04.2012 Bulletin 2012/16**

(51) Int Cl.:
*B22D 11/108* [(2006.01)]     *B22D 11/00* [(2006.01)]
*C21C 7/076* [(2006.01)]

(21) Application number: **09760453.2**

(22) Date of filing: **18.08.2009**

(86) International application number:
**PCT/JP2009/064429**

(87) International publication number:
**WO 2011/004507 (13.01.2011 Gazette 2011/02)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.07.2009 JP 2009160599**

(71) Applicant: **Sumitomo Metal Industries, Ltd.**
**Osaka 541-0041 (JP)**

(72) Inventors:
• **HANAO, Masahito**
  **Osaka-shi**
  **Osaka 541-0041 (JP)**

• **KAWAMOTO, Masayuki**
  **Osaka-shi**
  **Osaka 541-0041 (JP)**
• **TSUKAGUCHI, Yuichi**
  **Osaka-shi**
  **Osaka 54-0041 (JP)**
• **HAYASHI, Hiroshi**
  **Wakayama-shi**
  **Wakayama 640-8555 (JP)**

(74) Representative: **Jackson, Martin Peter**
**J A Kemp**
**14 South Square**
**Gray's Inn**
**London WC1R 5JJ (GB)**

(54) **MOLD FLUX FOR CONTINUOUS CASTING OF STEEL AND METHOD FOR CONTINUOUS CASTING OF STEEL USING SAME**

(57)    Mold flux for continuously casting steel which contains $SiO_2$, $T.CaO$, $Al_2O_3$ and $MgO$ as main components, one or two or more of alkali metal oxides, and further the constituent $F$, while the ratio of the $T.CaO$ content to the $SiO_2$ content being from 0.7 to 2.0, the $Al_2O_3$ content being 35% or less, the $MgO$ content being 20% or less, the total content of alkali metal oxides being 8% or less, the $F$ content being 7% or less, **characterized in that** each of the contents expressed by formulae (b) to (e) below satisfies the formula (a): $0.63 + 2.51 \times Y_{Al2O3}$ $\leq Y_{CaO}/Y_{SiO2} \leq 1.23 + 2.51 \times Y_{Al2O3}$ ... (a), $Y_{SiO2} = X_{SiO2}/(X_{SiO2} + X_{CaO} + X_{Al2O3} + X_{MgO})$ ... (b) , $Y_{CaO} = X_{CaO}/(X_{SiO2} + X_{CaO} + X_{Al2O3} + X_{MgO})$ ... (C), $Y_{Al2O3} = X_{Al2O3}/(X_{SiO2} + X_{CaO} + X_{Al2O3} + X_{MgO})$ ... (d) , and $Y_{MgO} = X_{MgO}/(X_{SiO2} + X_{CaO} + X_{Al2O3} + X_{MgO})$ ... (e). Continuous casting of a round billet using this mold flux can effectively prevent the generation of pin-hole defects and longitudinal cracking.

EP 2 441 541 A1

**Description**

TECHNICAL FIELD

The present invention relates to mold flux for continuously casting a steel billet whose section is round and a method of continuous casting using the same.

BACKGROUND ART

When a billet whose section is round (hereinafter noted as a "round billet") is continuously cast, the solidified shell in the mold entraps bubbles and defects (hereinafter referred to as "pin-hole defects") attributable thereto is often generated on the surface of the round billet. In addition, the inhomogeneous growth of the thickness of the solidified shell of the round billet frequently causes longitudinal cracking on the surface of the round billet.

As one method of preventing the generation of pin-hole defects, there is a method of making the basicity of mold flux to be equal to or higher than a predetermined value. Mold flux is provided onto the surface of molten steel in the mold in order to, for example, prevent the oxidation of the molten steel in the mold of a continuous casting machine, or keep a good lubrication between the mold and the strand. Typically, setting the basicity of the mold flux to be 1.0 or higher and keeping its composition basicity can prevent the oxidation of the molten steel component and the generation of CO bubbles.

A method of introducing mold flux into a gap between the mold surface and a solidified shell of a round billet along the mold surface to crystallize the resulting film is available as a method of preventing the occurrence of longitudinal cracking. Crystallizing the film and thus increasing the thermal resistance enables the solidified shell to be mildly cooled and uniformly grown.

Mold flux that prevents the occurrence of pin-hole defects or longitudinal cracking in continuous casting of a round billet is described, for example, in Patent Documents 1 to 7.

Patent Document 1 discloses a method of suppressing the oxidation of Mn in molten steel. It is a method of raising the value of the mass fraction ratio (hereinafter also referred to as "basicity") relative to $SiO_2$ of T.CaO in mold flux (mold powder) to 1.0 or more. The content of T.CaO refers to the content of CaO in mold flux in which its calcium content in the mold flux is totally converted to that of calcium oxide. Patent Document 1 also discloses a method of adjusting the solidification temperature of mold flux to be in a specified range and a method of adjusting the viscosity of mold flux to be in a predetermined range by setting the MgO content to be 5 to 15%, the $Na_2O$ content to be 4 to 15% and the F content to be 5% or less.

Patent Document 2 discloses a method of adjusting the melting rate of mold flux so that lubricity in the mold is maintained even when blending a carbonate having a specified content with mold flux having a basicity of 0.9 to 1.3 and carrying out casting at a high speed of 2 m/min or higher.

Patent Document 3 discloses a method of setting the flux basicity at 0.6 to 0.9 in order to prevent a rim formation in a mold (air gap between the mold and the solidified shell). The patent also discloses a method of preventing longitudinal cracking by increasing the melting point of mold flux to 1423K or more and then mildly cooling the solidified shell after the $Na_2O$ content in the mold flux is set at 5% or less and the F content at 1.0 to 7.0%.

Patent Document 4 discloses a method of increasing thermal resistance necessary for mild cooling by promoting the crystallization of akermanite in the film present between the mold and the solidified shell.

Patent Document 5 discloses a method of preventing the oxidation of compositional elements in molten steel and the entrapment of mold flux into the molten steel by dissolving gehlenite in akermanite to convert the composition of the crystal phase into melilite and increase the basicity to 1.1 or more without decreasing the viscosity. Melilite is a solid solution of akermanite ($Ca_2MgSi_2O_7$) and gehlenite ($Ca_2Al_2SiO_7$).

Patent Document 6 discloses a method of stabilizing the crystallization of melilite by adjusting the total content of $Al_2O_3$ and MgO, the total content of oxides of alkali metals, an F content, the total content of FeO and MnO, and an S content, in the basicity range of 1.0 to 1.5.

Patent Document 7 discloses a method of adjusting the total content of $Al_2O_3$ and MgO and a $TiO_2$ content in the basicity range of 1.1 to 1.6 to thereby promote the crystallization of melilite and then adjusting the content relation between F, $Na_2O$ and $Li_2O$ to precipitate cuspidine ($Ca_4Si_2O_7F_2$) at the same time. This method is considered to be able to stabilize the crystallization of melilite and overcome an unstable change in viscosity.

PRIOR ART DOCUMENTS

PATENT DOCUMENTS

Patent Document 1: Japanese Patent Application Publication No. 04-224063
Patent Document 2: Japanese Patent No. 2671644
Patent Document 3: Japanese Patent No. 2985671
Patent Document 4: Japanese Patent No. 3656615
Patent Document 5: Japanese Patent No. 3637895
Patent Document 6: Japanese Patent No. 3997963
Patent Document 7: Japanese Patent Application Publication No. 2007-185671

SUMMARY OF THE INVENTION

PROBLEMS TO BE SOLVED BY THE INVENTION

It is necessary to stably crystallize melilite in a mold flux film formed between the mold and solidified shell in order to ensure lubrication between the mold and round billet and the stability of its effect of mildly cooling the solidified shell. However, the stability in both of the crystallization of melilite and the effect of cooling the solidified shell should change depending on casting conditions such as the steel grade of the round billet, the casting speed and the cleanliness of the molten steel. The methods disclosed in the patent documents described above are not yet sufficient to maintain the stability and further improvement needs to be done, which remains as a problem to be solved.

The present invention has been made in consideration of the above problem, and an object thereof is to provide mold flux for continuous casting of an effective round billet for preventing pin-hole defects and the generation of longitudinal cracking. In addition, another object of the invention is to provide mold flux that exhibits more excellent advantages in mild cooling of the solidified shell and stability of fluid physical properties by further stabilizing the crystallization of melilite. Yet another object of the invention is to provide a continuous casting method using the mold flux.

MEANS FOR SOLVING THE PROBLEMS

The basicity is an important parameter to adjust the degree of crystallization of mold flux. However, the proper range of the basicity is different according to a target crystal phase to be promoted in crystallization. Moreover, the proper range of the basicity varies variously depending on contents of components other than CaO and $SiO_2$ in mold flux.

In particular, when the crystal phase that is a target for crystallization promotion is melilite, the proper range varies in a complex manner depending on the contents of $Al_2O_3$ and MgO that are constituents of melilite and further the contents of $Na_2O$, $Li_2O$ and F as being solvents in part.

However, in the conventional methods described above, it is just that the basicity range for promoting the crystallization of melilite is specified in a constant range such as 1.0 to 1.5 or 1.1 to 1.6 regardless of the content of each component in mold flux, and the impact of the content of each component therein is not taken into account.

Hence, the present inventors considered that a steadier effect of mild cooling should be achieved at continuous casting if the basicity range suitable for the crystallization of melilite that changes in a complex manner were able to be predicted properly while considering the content of each component in mold flux.

In mold flux when a round billet is cast, $Al_2O_3$ is known to be a component that exhibits large variation in content variation. In addition, $Al_2O_3$ is a constituent of melilite and has a direct influence on the crystallization of melilite. Because of this, the inventors paid attention to the dependence of the composition change of melilite on the $Al_2O_3$ content.

As described above, melilite is a wholly solid solution of akermanite ($Ca_2MgSi_2O_7$) and gehlenite ($Ca_2Al_2SiO_7$). In melilite, the change in composition heading toward gehlenite from akermanite as being the initiation point is considered to proceed by the substitution of $MgSiO_3$ in akermanite by $Al_2O_3$. In addition, this change in composition seems to be due to an increase in the content of $Al_2O_3$ and a decrease in the content of MgO along therewith and an increase in basicity.

In other words, when melilite is made to be stably present in mold flux, the basicity seems to be desirably increased according to the $Al_2O_3$ content in the mold flux. These allowed the present inventors to arrive at clarifying the quantitative relationship between the basicity and the $Al_2O_3$ content in mold flux and thereby stabilizing the melilite.

Here, when the basicity of mold flux is set, in what form F (fluorine) is present in the mold flux should be considered.

F is typically blended in mold flux as $CaF_2$ or NaF. Even when either $CaF_2$ or NaF is blended, F in the mold flux has stronger affinity with alkali metals as compared with Ca in a state in which the mold flux is melted at a high temperature, and primarily, the reaction of formula (A) below is considered to take place.

$$(CaF_2) + (Na_2O) \rightarrow (CaO) + 2 (NaF) \qquad (A)$$

In this regard, it is considered that F is bonded preferentially with the alkali metal, and the remaining F should be bonded with Ca. Moreover, it is appropriate to consider that Ca other than those bonded with F is present as an oxide.

The present inventors have found, based on the above discussion, that the basicity of mold flux evaluated while considering the presence of F is also effective, for example, not only when a crystal phase such as cuspidine ($Ca_4SiO_7F_2$) including F is made stably present, but also when a mold flux composition in which melilite is stably present is properly predicted.

The present invention has been made on the basis of the findings above, and the gist of the invention consists in mold flux for continuous casting of steel of (1) below and a method of continuously casting steel of (2) below.

(1) Mold flux for continuously casting steel which contains $SiO_2$, T.CaO, $Al_2O_3$ and MgO as main components, one or two or more of alkali metal oxides, and further constituent F, while, by mass%, the ratio "T.CaO/SiO2" of a T.CaO content to an $SiO_2$ content being from 0. 7 to 2. 0, the $Al_2O_3$ content being 35% or less, the MgO content being 20% or less, the total content of alkali metals oxides being 8% or less, and the F content being 7% or less, **characterized in that** each of mass fraction ratios expressed by formulae (b) to (e) below satisfies the formula (a):

$$0.63 + 2.51 \times Y_{Al2O3} \leq Y_{CaO}/Y_{SiO2} \leq 1.23 + 2.51 \times Y_{Al2O3} \quad ... \quad (a),$$

where,

$$Y_{SiO2} = X_{SiO2}/(X_{SiO2} + X_{CaO} + X_{Al2O3} + X_{MgO}) \quad ... \quad (b)$$

$$Y_{CaO} = X_{CaO}/(X_{SiO2} + X_{CaO} + X_{Al2O3} + X_{MgO}) \quad ... \quad (c)$$

$$Y_{Al2O3} = X_{Al2O3}/(X_{SiO2} + X_{CaO} + X_{Al2O3} + X_{MgO}) \quad ... \quad (d)$$

and

$$Y_{MgO} = X_{MgO}/(X_{SiO2} + X_{CaO} + X_{Al2O3} + X_{MgO}) \quad ... \quad (e).$$

in additon,

$$X_{CaF2} = (W_F - 1.27 \times W_{Li2O} - 0.613 \times W_{Na2O} - 0.403 \times W_{K2O}) \times 2.05 \quad ...$$
$$(f)$$

$$X_{CaO} = W_{T.CaO} - X_{CaF2} \times 0.718 \quad ... \quad (g)$$

$$X_{SiO2} = W_{SiO2} \quad ... \quad (h)$$

$$X_{Al2O3} = W_{Al2O3} \quad ... \quad (i)$$

and

$$X_{MgO} = W_{MgO} \quad ... \quad (j),$$

given that $W_{T.CaO}$ denotes the T.CaO content, likewise, $W_F$ as the F content, and $W_{Li2O}$, $W_{Na2O}$ and $W_{K2O}$, respectively, as the contents of $Li_2O$, $Na_2O$ and $K_2O$ that are alkali metal oxides, $W_{SiO2}$ as the $SiO_2$ content, $W_{Al2O3}$ as the $Al_2O_3$ content, and $W_{MgO}$ as the MgO content, in terms of mass%.

In mold flux for continuously casting steel described (1) above, one or more of $TiO_2$ and $ZrO_2$ are contained and the total content may be 8 mass% or less.

(2) A method of continuously casting steel, **characterized in that** a round billet is cast using mold flux for continuous casting described (1) above.

In the method of continuously casting steel described in (2) above, the specific amount of cooling water is preferably in the range of 0.2 to 1.6 L/kg when cast steel is subjected to secondary cooling using cooling water.

In description herein, "%" that is used in component compositions and concentrations (contents) for steel and mold flux means "mass%".

ADVANTAGES OF THE INVENTION

According to the mold flux for continuously casting steel of the present invention, the crystallization of melilite in mold flux can be stabilized to thereby prevent pin-hole defects and longitudinal cracking to be generated in a round billet surface. In particular, the crystallization of melilite can be further stabilized by specifying the composition of the mold flux (basicity) according to the content of $Al_2O_3$. In addition, according to the method of continuously casting steel of the present invention, a round billet of high quality that has neither pin-hole defects nor longitudinal cracking on the surface can be stably manufactured.

BEST MODE FOR CARRYING OUT THE INVENTION

1.Composition range of mold flux and reason for limiting it>

<Composition range of mold flux>

The mold flux of the present invention includes $SiO_2$, T.CaO, $Al_2O_3$ and MgO as main components. The mold flux also includes one or two or more of oxides of alkali metals and further F. In addition, $TiO_2$, $ZrO_2$, MnO or the like can be added, as required, to the mold flux for the control of the solidification temperature, viscosity, surface tension or the like.

For those main components, the range of T.CaO/$SiO_2$, which is the ratio of $W_{CaO}$ as the T.CaO content to $W_{SiO2}$ as the $SiO_2$ content (basicity) in the mold flux, is from 0.7 to 2.0, $W_{Al2O3}$ as the $Al_2O_3$ content is 35% or less, and $W_{MgO}$ as the MgO content is 20% or less. Additionally, the total content of oxides of alkali metals is 8% or less, and $W_F$ as the F content is 7% or less.

Moreover, between each of the components of the mass fractions $Y_{SiO2}$, $Y_{CaO}$, $Y_{Al2O3}$ and $Y_{MgO}$ expressed in $SiO_2$, CaO, $Al_2O_3$ and MgO of a quaternary system represented by (b) to (e) below, the condition of formula (a) below is made satisfied:

$$0.63 + 2.51 \times Y_{Al2O3} \leq Y_{CaO}/Y_{SiO2} \leq 1.23 + 2.51 \times Y_{Al2O3} \quad \ldots \quad (a)$$

$$Y_{SiO2} = X_{SiO2}/(X_{SiO2} + X_{CaO} + X_{Al2O3} + X_{MgO}) \quad \ldots \quad (b)$$

$$Y_{CaO} = X_{CaO}/(X_{SiO2} + X_{CaO} + X_{Al2O3} + X_{MgO}) \quad \ldots \quad (c)$$

$$Y_{Al2O3} = X_{Al2O3}/(X_{SiO2} + X_{CaO} + X_{Al2O3} + X_{MgO}) \quad \ldots \quad (d)$$

and

$$Y_{MgO} = X_{MgO}/(X_{SiO2} + X_{CaO} + X_{Al2O3} + X_{MgO}) \quad \ldots \quad (e),$$

wherein, when F is present in the flux, in consideration of affinity of F with alkali metals, the effective content $X_{CaF2}$ of $CaF_2$ is calculated using formulae (f) to (j) below from $W_F$ as the F content and further from $W_{Li2O}$, $W_{Na2O}$ and $W_{K2O}$ as the contents of $Li_2O$, $Na_2O$ and $K_2O$, respectively, which are oxides of alkali metals. Furthermore, the effective content $X_{CaO}$ of CaO is calculated.

$$X_{CaF2} = (W_F - 1.27 \times W_{Li2O} - 0.613 \times W_{Na2O} - 0.403 \times W_{K2O}) \times 2.05 \ldots (f)$$

$$X_{CaO} = W_{T.CaO} - X_{CaF2} \times 0.718 \ldots (g)$$

$$X_{SiO2} = W_{SiO2} \ldots (h)$$

$$X_{Al2O3} = W_{Al2O3} \ldots (i)$$

$$X_{MgO} = W_{MgO} \ldots (j)$$

<Reason for limiting basicity and content of $Al_2O_3$>

As described above, the range of basicity ($T.CaO/SiO_2$) of the mold flux of the present invention is from 0.7 to 2.0. In this range, the basicity suitable for stabilizing the crystallization of melilite varies depending on $W_{Al2O3}$ as the $Al_2O_3$ content as described above. Because of this, the converted equivalent basicity of the mold flux ($Y_{CaO}/Y_{SiO2}$) is set within the range described by formula (a) above. This deals with the case that the range of the converted equivalent basicity $Y_{CaO}/Y_{SiO2}$ appropriate for promoting the crystallization of melilite increases with increasing $Y_{Al2O3}$.

When the basicity of the mold flux ($T.CaO/SiO_2$) is less than 0. 7 or more than 2.0, either case, even at any $Al_2O_3$ content, results in the composition of the mold flux being different from that of the crystal phase of akermanite or gehlenite, so that the crystallization of the mold flux becomes difficult.

It is difficult to completely remove $Al_2O_3$ from the mold flux. Moreover, in mold flux during casting, the content of $Al_2O_3$ is increased due to absorption of inclusions in the molten steel by the mold flux and/or due to the oxidation of Al in the molten steel.

When the basicity of mold flux is increased while stabilizing the crystallization of melilite, it is effective to blend $Al_2O_3$ in the initial composition of the mold flux before the mold flux is used for casting.

In mold flux, when the content of $Al_2O_3$ is as much as exceeding 35%, the solidification temperature becomes 1300˚C or more. In this case, it is difficult for mold flux to serve as a lubricant, whereby the mold flux cannot be used for continuous casting. Therefore, the content of $Al_2O_3$ in mold flux is set at 35% or less.

<Reason for limiting the content of MgO>

It is effective to add MgO into the initial composition of mold flux for crystallizing akermanite. In the mold flux of the present invention, the range of $W_{MgO}$ as the MgO content is 20% or less. In mold flux, when the content of MgO is as much as exceeding 20%, the solidification temperature becomes 1300˚C or more. In this case, the mold flux is difficult to serve as a lubricant, so that it becomes unable to be used for continuous casting. Because of this, the content of MgO in the mold flux is set at 20% or less. In this content range, the range for crystallizing akermanite is preferably from 5 to 18%, more preferably from 6 to 15%.

<Reason for limiting the contents of alkali metals oxides and F>

The solidification temperature or the viscosity can be adjusted by adding alkali metals oxides and F to the mold flux. When the alkali metals oxides are excessively added to the mold flux, it sinters excessively in the mold, and rather possibly lowers the melting rate of the mold flux. Hence, the content of alkali metals oxides is set at 8% or less.

When F is excessively added, cuspidine is crystallized in an unignorable amount relative to melilite. In this case, since the temperature fluctuation of the copper plate as the mold makeup may become large, $W_F$ as the F content is set at 7% or less. The content of F is desirably 6% or less, more desirably 5% or less.

<Addition of $TiO_2$ and $ZrO_2$>

One or more of $TiO_2$ and $ZrO_2$ may be added to the mold flux of the present invention. These are effective for adjustment of the viscosity of the mold flux. $ZrO_2$ is more effective for promotion of the crystallization of the mold flux and reduction of the wastage of an immersed nozzle. For the amount of addition of $TiO_2$ and $ZrO_2$, the total content of $W_{Tio2}$ as the $TiO_2$ content and $W_{ZrO2}$ as the $ZrO_2$ content is desirably 8% or less. When the content of addition is set as much as exceeding 8%, the solidification temperature or the viscosity of the mold flux rises in excess, thereby resulting in obtaining insufficient lubricity in the mold.

<Suppression of composition variation during casting and addition of MnO>

Addition of MnO into mold flux in advance can be considered as one method of reducing the compositional variation of the mold flux during casting. The content of MnO in the mold flux is increased by oxidation of Mn in molten steel to MnO. Addition of MnO to mold flux effectively functions in that an increase in the content of MnO is suppressed, by increasing the activity of MnO in the mold flux in advance.
When MnO is added to the mold flux, the content of MnO is desirably 5% or less. When the MnO content is set as much as exceeding 5%, entrapment of mold flux into molten steel in the mold is increased since the viscosity of the mold flux excessively lowers.

<CaO source, $SiO_2$ source, and $Al_2O_3$ source>

A CaSi alloy, a Si metal or a CaAl alloy, respectively, can be blended in mold flux as a CaO source, $SiO_2$ source or $Al_2O_3$ source. These metal and alloys are oxidized in the mold at a high temperature and finally become oxides. Heat generation in oxidation effectively functions for preserving heat of molten steel. Iron oxides serving as a fuel additive for these metal and alloys may be blended in mold flux.

2. Continuous casting method

The method of continuously casting steel of the present invention is a method of casting a round billet using mold flux for continuous casting of the present invention as described above.

<Specific amount of cooling water for secondary cooling>

In the method of continuously casting steel of the present invention, the specific amount of cooling water for secondary cooling (amount of water used for secondary cooling per kg of cast steel) is desirably from 0.2 to 1.6 L/kg. If less than 0.2 L/kg, the roundness of round billet (cast steel) gets worse, whereby tube making with this round billet becomes difficult. If as much as exceeding 1.6 L/kg, the round billet surface is excessively cooled, so that cracks may be generated on the surface when the curvature of round billet given in casting is straightened.

EXAMPLE

Tests carried out to ascertain the effect of the present invention will be described below.

1. Test method

1-1. Mold flux

Mold flux of 24 kinds of compositions shown in Table 1 is prepared as test samples in order to perform continuous casting testing of round billets. Table 1 also lists basicities (T.CaO/$SiO_2$), converted equivalent basicities ($Y_{CaO}/Y_{SiO2}$) and ranges of $Y_{CaO}/Y_{SiO2}$ specified by the formula (a) above, in addition to compositions (component contents).
[Table 1]

Table 1

| Designation of Test Sample | Type | Basicity (T.CaO/SiO$_2$) (-) | Component content (mass%) | | | | | F | Y$_{CaO}$/Y$_{SiO2}$ | Range of Y$_{CaO}$/Y$_{SiO2}$ specified by formula (a) |
|---|---|---|---|---|---|---|---|---|---|---|
| | | | Al$_2$O$_3$ | MgO | Na$_2$O | Li$_2$O +K$_2$O | TiO$_2$ +ZrO$_2$ | | | |
| A | Comparative Example 1 | 0.70 | 2.5 | 13.0 | 1.0 | – | – | 4.0 | 0.59 | 0.70 – 1.30 |
| B | Inventive Example | 1.10 | 3.0 | 13.0 | 1.0 | – | – | 4.0 | 0.97 | 0.71 – 1.31 |
| C | Comparative Example 2 | 1.55 | 3.3 | 13.0 | 1.0 | – | – | 4.0 | 1.39 | 0.72 – 1.32 |
| D | Comparative Example 1 | 0.80 | 8.0 | 13.0 | 1.0 | – | – | 4.0 | 0.68 | 0.85 – 1.45 |
| E | Inventive Example | 1.20 | 8.0 | 13.0 | 1.0 | – | – | 4.0 | 1.05 | 0.85 – 1.45 |
| F | Comparative Example 2 | 1.75 | 8.0 | 13.0 | 1.0 | – | – | 4.0 | 1.57 | 0.85 – 1.45 |
| G | Comparative Example 1 | 0.70 | 15.0 | 13.0 | 1.0 | – | – | 4.0 | 0.57 | 1.05 – 1.65 |
| H | Comparative Example 1 | 0.90 | 15.0 | 13.0 | 1.0 | – | – | 4.0 | 0.76 | 1.05 – 1.65 |
| J | Inventive Example | 1.40 | 15.0 | 13.0 | 1.0 | – | – | 4.0 | 1.22 | 1.05 – 1.65 |
| K | Comparative Example 2 | 1.90 | 15.0 | 13.0 | 1.0 | – | – | 4.0 | 1.69 | 1.05 – 1.65 |
| L | Comparative Example 1 | 1.00 | 21.0 | 13.0 | 1.0 | – | – | 4.0 | 0.84 | 1.22 – 1.82 |

Table 1–Continued

| Designation of Test Sample | Type | Basicity (T.CaO/SiO$_2$) (-) | Component content (mass%) | | | | | F | Y$_{CaO}$/Y$_{SiO2}$ | Range of Y$_{CaO}$/Y$_{SiO2}$ specified by formula (a) |
|---|---|---|---|---|---|---|---|---|---|---|
| | | | Al$_2$O$_3$ | MgO | Na$_2$O | Li$_2$O +K$_2$O | TiO$_2$ +ZrO$_2$ | | | |
| M | Inventive Example | 1.55 | 21.0 | 13.0 | 1.0 | – | – | 4.0 | 1.34 | 1.22 – 1.82 |
| N | Comparative Example 2 | 2.10 | 21.0 | 13.0 | 1.0 | – | – | 4.0 | 1.85 | 1.22 – 1.82 |
| P | Comparative Example 1 | 1.05 | 13.0 | 2.7 | 1.2 | – | – | 5.0 | 0.89 | 1.00 – 1.60 |
| Q | Inventive Example | 1.45 | 13.0 | 2.7 | 1.2 | – | – | 5.0 | 1.25 | 1.00 – 1.60 |
| R | Comparative Example 2 | 2.00 | 13.0 | 2.7 | 1.2 | – | – | 5.0 | 1.76 | 1.00 – 1.60 |
| S | Comparative Example 1 | 1.50 | 28.0 | 5.0 | 4.5 | – | – | 5.0 | 1.36 | 1.44 – 2.04 |
| T | Inventive Example | 2.00 | 28.0 | 5.0 | 5.4 | – | – | 5.0 | 1.87 | 1.44 – 2.04 |
| U | Comparative Example 2 | 2.25 | 28.0 | 5.0 | 5.1 | – | – | 5.0 | 2.09 | 1.44 – 2.04 |
| V | Comparative Example 1 | 0.69 | 3.0 | 8.0 | 1.0 | – | – | 2.0 | 0.65 | 0.71 – 1.31 |
| W | Inventive Example | 0.85 | 3.0 | 8.0 | 1.0 | – | – | 2.0 | 0.81 | 0.71 – 1.31 |
| X | Comparative Example 2 | 1.40 | 3.0 | 8.0 | 1.0 | – | – | 2.0 | 1.35 | 0.71 – 1.31 |

Table 1-Continued

| Designation of Test Sample | Type | Basicity (T.CaO/ SiO₂) (-) | Component content (mass%) | | | | | | $Y_{CaO}/Y_{SiO2}$ | Range of $Y_{CaO}/Y_{SiO2}$ specified by formula (a) |
|---|---|---|---|---|---|---|---|---|---|---|
| | | | $Al_2O_3$ | MgO | $Na_2O$ | $Li_2O$ $+K_2O$ | $TiO_2$ $+ZrO_2$ | F | | |
| Y | Inventive Example | 1.20 | 13.5 | 9.4 | 1.5 | 2.0 | 3.0 | 5.0 | 1.13 | 1.02 - 1.62 |
| Z | Comparative Example 3 | 1.10 | 4.3 | 13.0 | 1.0 | - | - | 8.0 | 0.78 | 0.77 - 1.37 |

Remarks: Underlined figures in the table show deviation from the range of Inventive Example.

Test Sample Nos. B, E, J, M, Q, T, W and Y are in the composition range specified by the present invention, which are Inventive Examples.

Test Sample Nos. A, D, G, H, L, P, S and V are Comparative Examples in which the value of $Y_{CaO}/Y_{SiO2}$ deviates from and lower than the range specified by formula (a) above, which is classified in Table 1 as Comparative Example 1.

Test Sample Nos. C, F, K, N, R, U and X are Comparative Examples in which the value of $Y_{CaO}/Y_{SiO2}$ deviates from and higher than the range specified by the formula (a) above, which is classified in Table 1 as Comparative Example 2.

Test Sample No. Z is a Comparative Example in which the F content deviates from and higher than the range specified by the present invention, which is classified in Table 1 as Comparative Example 3.

Each Test Sample was heated in a crucible and its viscosity at 1300°C was measured using an oscillating-plate viscometer and so was done the solidification temperature. In addition, after the measurements of the viscosity and solidification temperature, the properties of the Test Samples solidified in the crucible were observed.

1-2. Continuous casting of round billets

A round billet was cast using mold flux shown in Table 1 by means of a curved-type continuous caster. However, the mold flux of Comparative Example 2 was not used in continuous casting as described below. The round billet has a sectional diameter of 225 mm and comprises a medium carbon steel having a C content of 0.10 to 0.23% and an Mn content of 0.60 to 1.40%. The casting speed was set in the range of 2.0 to 2.4mm/min.

2. Test results

2-1. Mold flux

For the rating indexes of mold flux, the solidification temperature, the viscosity at 1300°C and the properties after solidification for each test sample is employed, as shown in Table 2.

[Table 2]

Table 2

| Designation of Test Sample | Classification | Solidification temperature (°C) | Viscosity at 1300°C (poise) | Properties after solidification |
|---|---|---|---|---|
| A | Comparative Example 1 | 1155 | 3.3 | Glassy |
| B | Inventive Example | 1222 | 2.2 | Crystalline (melilite) |
| C | Comparative Example 2 | >1300 | - | Crystalline (melilite) |
| D | Comparative Example 1 | 1152 | 4.5 | Glassy |
| E | Inventive Example | 1247 | 3.0 | Crystalline (melilite) |
| F | Comparative Example 2 | >1300 | - | Crystalline (melilite) |
| G | Comparative Example 1 | 1084 | 7.4 | Glassy |
| H | Comparative Example 1 | 1124 | 8.6 | Glassy |
| J | Inventive Example | 1249 | 4.5 | Crystalline (melilite) |
| K | Comparative Example 2 | >1300 | - | Crystalline (melilite) |
| L | Comparative Example 1 | 1148 | 9.7 | Glassy |
| M | Inventive Example | 1232 | 6.8 | Crystalline (melilite) |
| N | Comparative Example 2 | >1300 | - | Crystalline (melilite) |
| P | Comparative Example 1 | 1173 | 3.2 | Crystalline (melilite) |

Table 2-Continued

| Designation of Test Sample | Classification | Solidification temperature (°C) | Viscosity at 1300°C (poise) | Properties after solidification |
|---|---|---|---|---|
| Q | Inventive Example | 1218 | 3.2 | Crystalline (melilite) |
| R | Comparative Example 2 | >1300 | – | Crystalline (melilite) |
| S | Comparative Example 1 | 1176 | 2.9 | Crystalline (melilite) |
| T | Inventive Example | 1239 | 3.5 | Crystalline (melilite) |
| U | Comparative Example 2 | >1300 | – | Crystalline (melilite) |
| V | Comparative Example 1 | 1104 | 5.5 | Glassy |
| W | Inventive Example | 1225 | 5.5 | Crystalline (melilite) |
| X | Comparative Example 2 | >1300 | – | Crystalline (melilite) |
| Y | Inventive Example | 1176 | 5.9 | Crystalline (melilite) |
| Z | Comparative Example 3 | 1143 | 2.2 | Crystalline (melilite + cuspidine) |

As indicated in Table 2, any kind of mold flux as being Inventive Examples had a solidification temperature of 1176 to 1249°C and a viscosity at 1300°C of about 2 to 7 poises. In addition, in all of Test Samples after solidification, melilite was precipitated.

Any kind of mold flux as being Comparative Example 1 had a solidification temperature of 1084 to 1176°C, which was lower than that of the mold flux as Inventive Examples, and the Test Sample after solidification was basically glassy.

In any kind of mold flux as being Comparative Example 2, it had a solidification temperature of 1300°C or more and was unable to be used for continuous casting.

For the mold flux of Comparative Example 3, cuspidine as well as melilite was identified in the crystal of the Test Sample after solidification.

2-2. Continuous casting of round billets

As shown in Table 3, pin-hole defects, longitudinal cracking and the mold temperature variation were regarded as rating indexes for continuous casting of round billets. Table 3 showed the solidification temperatures of all kinds of mold flux that were used, their viscosities at 1300°C, basicities and the specific amounts of cooling water for secondary cooling in casting, in addition to the rating indexes. The specific amount of cooling for secondary cooling was set at 1.2 L/kg as a standard and basically set constant. However, in the test using the mold flux of Test Sample No. J, the continuous casting was carried out under three levels of cooling water as being 1.2, 0.2 and 1.6 L/kg for secondary cooling.

[Table 3]

Table 3

| Designation of Test Sample | classification | Solidification temperature (°C) | Viscosity at 1300°C (poise) | Basicity (T.CaO/ SiO$_2$)(−) | Specific Amount of cooling water for secondary cooling (L/kg) | Pin-hole defects | Longitudinal cracking | Mold temperature variation |
|---|---|---|---|---|---|---|---|---|
| A | Comparative Example 1 | 1155 | 3.3 | 0.70 | 1.2 | × | Δ | Δ |
| B | Inventive Example | 1222 | 2.2 | 1.10 | | ○ | ○ | ○ |
| C | Comparative Example 2 | >1300 | − | 1.55 | | Not used for casting | | |
| D | Comparative Example 1 | 1152 | 4.5 | 0.80 | | × | Δ | ○ |
| E | Inventive Example | 1247 | 3.0 | 1.20 | | ○ | ○ | ○ |
| F | Comparative Example 2 | >1300 | − | 1.75 | | Not used for casting | | |
| G | Comparative Example 1 | 1084 | 7.4 | 0.70 | | × | × | × |
| H | Comparative Example 1 | 1124 | 8.6 | 0.90 | | × | Δ | Δ |
| J | Inventive Example | 1249 | 4.5 | 1.40 | | ○ | ○ | ○ |

Table 3-Continued

| Designation of Test Sample | Classification | Solidification temperature (°C) | Viscosity at 1300°C (poise) | Basicity (T.CaO/ SiO₂) (-) | Specific Amount of cooling water for secondary cooling (L/kg) | Pin-hole defects | Longitudinal cracking | Mold temperature variation |
|---|---|---|---|---|---|---|---|---|
| J | Inventive Example | 1249 | 4.5 | 1.40 | 0.2 | ○ | ○ | ○ |
| J | Inventive Example | 1249 | 4.5 | 1.40 | 1.6 | ○ | ○ | ○ |
| K | Comparative Example 2 | >1300 | – | 1.90 | 1.2 | Not used for casting | | |
| L | Comparative Example 1 | 1148 | 9.7 | 1.00 | | ○ | × | Δ |
| M | Inventive Example | 1232 | 6.8 | 1.55 | | ○ | ○ | ○ |
| N | Comparative Example 2 | >1300 | – | 2.10 | 1.2 | Not used for casting | | |
| P | Comparative Example 1 | 1173 | 3.2 | 1.05 | | ○ | Δ | Δ |
| Q | Inventive Example | 1218 | 3.2 | 1.45 | | ○ | ○ | ○ |
| R | Comparative Example 2 | >1300 | – | 2.00 | | Not used for casting | | |
| S | Comparative Example 1 | 1176 | 2.9 | 1.50 | | ○ | Δ | Δ |

Table 3-Continued

| Designation of Test Sample | Classification | Solidification temperature (°C) | Viscosity at 1300°C (poise) | Basicity (T.CaO/ SiO$_2$) (-) | Specific Amount of cooling water for secondary cooling (L/kg) | Pin-hole defect | Longitudinal cracking | Mold temperature variation |
|---|---|---|---|---|---|---|---|---|
| T | Inventive Example | 1239 | 3.5 | 2.00 | | o | o | o |
| U | Comparative Example 2 | >1300 | – | 2.25 | | Not used for casting | | |
| V | Comparative Example 1 | 1104 | 5.5 | 0.69 | | × | × | × |
| W | Inventive Example | 1225 | 5.5 | 0.85 | 1.2 | o | o | o |
| X | Comparative Example 2 | >1300 | – | 1.40 | | Not used for casting | | |
| Y | Inventive Example | 1176 | 5.9 | 1.20 | | o | o | o |
| Z | Comparative Example 3 | 1143 | 2.2 | 1.10 | | o | × | × |

EP 2 441 541 A1

In the columns of pin-hole defects and longitudinal cracking in Table 3, the mark "o" indicates that the billet had no defects and was good, the mark "Δ" indicates that the billet needed surface conditioning, and the mark "×" indicates that the billet could not become a product even with the surface conditioning. In the column of the variation of mold temperature, the mark "○" indicates that the variation was small and stable, the mark "Δ" indicates that the operation for lowering the casting speed was not needed although the variation was slightly present, and the mark "×" indicates that the variation was large and the operation for lowering the casting speed was unavoidable.

As shown in Table 3, when any kind of mold flux as being Inventive Example was used, all the rating indexes had the mark "○", it becomes possible to prevent pin-hole defects and longitudinal cracking on the surface of the round billets, and the variations of the mold temperatures were also small and stable.

In the casting using Test Sample No. J, the mold flux as Inventive Example, when the specific amount of cooling water for secondary cooling was decreased to 0.2 L/kg, the roundness of the billet section got worse to some extent, posing almost no threat of problem. In this regard, there had been a fear that if the specific amount of cooling water were to be decreased to further less than 0.2 L/kg, the subsequent processes of tube-making should have caused trouble.

In casting using Test Sample No. J, when the specific amount of cooling water was increased to 1.6 L/kg, the load of the pinch roll when the round billet was withdrawn was increased. In this case, there was no problem in the quality of the round billet. In this regard, there had been a fear that when the specific amount of cooling water of 1.6 L/kg was further increased and still stronger cooling was provided, the cracks on the round billet surface should have been generated because intensive strain was to be imposed when straightening the curvature of round billet in a continuous casting machine.

Among those kinds of mold flux as Comparative Example 1, the basicities of Test Sample Nos. A, D, G, H and V were low. Hence, in the round billets obtained using these kinds of mold flux, pin-hole defects occurred sporadically on the surfaces. No round billets could not become products even by surface conditioning because of the evaluation of pin-hole defects being "×".

Moreover, in the round billets obtained using any kind of mold flux as Comparative Examples 1 and 3, the evaluation for longitudinal cracking was "Δ" or "x", and longitudinal cracking was generated on the surfaces in various modes. In particular, the round billets obtained using Test Sample Nos. G and V having a solidification temperature of about 1100˚C or less must be handled as scraps or the like because open longitudinal cracking is generated over the entire length.

When Test Sample Nos. G and V as being Comparative Example 1, were used, a film formed between the mold and the solidified shell was glassy, so that the solidified shell was rapidly cooled and the thickness of the solidified shell was not uniform. Because of this, the variation of the mold temperature was particularly large and thus a break-out alarm installed in the continuous casting machine was triggered, whereby the casting speed had to be as low as less than 2.0 mm/min in order to continue casting.

In Test Sample No. Z, or Comparative Example 3, crystallization generated in the film became unstable, so that the variation of the mold temperature got large and thus the break-out alarm was triggered.

In Test Sample Nos. P and S as being Comparative Example 1, the solidification temperature of each of them was 1176˚C or less, which was lower than that of such mold flux as Inventive Example. Hence, minor dents and longitudinal cracking were generated in resulting round billets, whereby surface conditioning was needed. Moreover, the mold temperature varied slightly though the continuation of casting was possible.

Industrial Applicability

According to the mold flux for continuously casting steel of the present invention, the crystallization of melilite in mold flux can be stabilized to thereby prevent pin-hole defects and longitudinal cracking to be generated in the round billet surface. In particular, the composition of the mold flux (basicity) is specified according to the content of $Al_2O_3$, so that the crystallization of the melilite can be further stabilized. In addition, according to the method of continuously casting steel of the present invention, a round billet of high quality that has no pin-hole defects and no longitudinal cracking on the surface can be stably manufactured.

Therefore, the mold flux for the continuous casting of steel of the present invention can be widely applied to the continuous casting of steel including round billets.

**Claims**

1. Mold flux for continuously casting steel which contains $SiO_2$, T.CaO, $Al_2O_3$ and MgO as main components, one or two or more of alkali metal oxides, and further constituent F, while, by mass%, the ratio "T.CaO/$SiO_2$" of the T.CaO content to the $SiO_2$ content being from 0.7 to 2.0, the $Al_2O_3$ content being 35% or less, the MgO content being 20% or less, the total content of alkali metal oxides being 8% or less, and the F content being 7% or less, **characterized**

**in that**:

each of the contents expressed by formulae (b) to (e) below satisfies the formula (a),

$$0.63 + 2.51 \times Y_{Al2O3} \leq Y_{CaO}/Y_{SiO2} \leq 1.23 + 2.51 \times Y_{Al2O3} \dots (a)$$

wherein,

$$Y_{SiO2} = X_{SiO2}/(X_{SiO2} + X_{CaO} + X_{Al2O3} + X_{MgO}) \dots (b)$$

$$Y_{CaO} = X_{CaO}/(X_{SiO2} + X_{CaO} + X_{Al2O3} + X_{MgO}) \dots (c)$$

$$Y_{Al2O3} = X_{Al2O3}/(X_{SiO2} + X_{CaO} + X_{Al2O3} + X_{MgO}) \dots (d)$$

and

$$Y_{MgO} = X_{MgO}/(X_{SiO2} + X_{CaO} + X_{Al2O3} + X_{MgO}) \dots (e).$$

and wherein,

$$X_{CaF2} = (W_F - 1.27 \times W_{Li2O} - 0.613 \times W_{Na2O} - 0.403 \times W_{K2O}) \times 2.05 \dots (f),$$

$$X_{CaO} = W_{T.CaO} - X_{CaF2} \times 0.718 \dots (g),$$

$$X_{SiO2} = W_{SiO2} \dots (h),$$

$$X_{Al2O3} = W_{Al2O3} \dots (i)$$

and

$$X_{MgO} = W_{MgO} \dots (j),$$

given that $W_{T.CaO}$ denotes the T.CaO content, likewise, $W_F$ as the F content, $W_{Li2O}$, $W_{Na2O}$ and $W_{K2O}$, respectively, as the contents of $Li_2O$, $Na_2O$ and $K_2O$ that are alkali metal oxides, $W_{SiO2}$ as the $SiO_2$ content, $W_{Al2O3}$ as the $Al_2O_3$ content, and $W_{MgO}$ as the MgO content, in terms of mass%.

2. The mold flux for continuously casting steel according to claim 1, **characterized in that** the mold flux further contains one or more of $TiO_2$ and $ZrO_2$ and the total content thereof is not more than 8 mass%.

3. A method of continuously casting steel, **characterized in that** a round billet is cast using the mold flux for continuous casting according to claim 1 or 2.

4. The method of continuously casting steel according to claim 3, **characterized in that** when secondary cooling is applied to cast steel by using cooling water, the specific amount of the cooling water is set in the range of 0.2 to 1.6 L/kg.

<table>
<tr><td colspan="2" align="center">**INTERNATIONAL SEARCH REPORT**</td><td colspan="2">International application No.<br>PCT/JP2009/064429</td></tr>
</table>

| A. CLASSIFICATION OF SUBJECT MATTER |
| --- |
| B22D11/108(2006.01)i, B22D11/00(2006.01)i, C21C7/076(2006.01)i |

According to International Patent Classification (IPC) or to both national classification and IPC

| B. FIELDS SEARCHED |
| --- |
| Minimum documentation searched (classification system followed by classification symbols)<br>B22D11/108, B22D11/00, C21C7/076 |

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 2003-326342 A (Sumitomo Metal Industries, Ltd.),<br>18 November 2003 (18.11.2003),<br>table 1; paragraph [0046]<br>(Family: none) | 1-3<br>4 |
| X<br>A | JP 2007-203364 A (Sumitomo Metal Industries, Ltd.),<br>16 August 2007 (16.08.2007),<br>table 1<br>(Family: none) | 1,2<br>3,4 |
| Y<br>A | JP 2005-52881 A (Sumitomo Metal Industries, Ltd.),<br>03 March 2005 (03.03.2005),<br>claims; paragraph [0051]<br>(Family: none) | 4<br>1-3 |

☐ Further documents are listed in the continuation of Box C.  ☐ See patent family annex.

| | |
| --- | --- |
| *  Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
| --- | --- |
| Date of the actual completion of the international search<br>27 October, 2009 (27.10.09) | Date of mailing of the international search report<br>02 November, 2009 (02.11.09) |
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4224063 A
- JP 2671644 B
- JP 2985671 B
- JP 3656615 B
- JP 3637895 B
- JP 3997963 B
- JP 2007185671 A